# EUROPÄISCHE PATENTANMELDUNG

(11) **EP 1 333 640 A2**
(43) Veröffentlichungstag der Anmeldung: **06.08.2003**
(21) Anmeldenummer: 03002236.2
(22) Anmeldetag: 31.01.2003
(51) Int. Cl.: H04L 29/06, H04L 29/12, H04L 12/24

(54) **Verfahren zum Konfigurieren und Registrieren von Applikationen in einem Kommunikationsnetzwerk**

(30) Priorität: 01.02.2002 DE 10204009
(71) Anmelder: Tenovis GmbH & Co. KG, 60326 Frankfurt (DE)
(72) Erfinder: Menk, Klaus-Dieter, 65597 Hünfelden-Ohren (DE); Rotter, Frank, 71336 Waiblingen (DE); Dauborn, Ulla, 63477 Maintal (DE); Halfmann, Jörg, 64293 Darmstadt (DE); Gleisenberger, Jutta, 61169 Friedberg (DE)
(74) Vertreter: Heinze, Ekkehard, Dipl.-Phys. Dr.

(57) **Zusammenfassung**

Die Erfindung betrifft ein Verfahren und eine Vorrichtung zum Konfigurieren und Registrieren von Applikationen (40, 40', 40'', 40''') in einem Kommunikationsnetzwerk, mit einer zwischen Terminals (60, 60') und wenigstens einen Server (20, 20') geschalteten TK-Anlage (10). Vor der Inbetriebnahme muss ein derartiges Telekommunikationssystem bislang vorkonfiguriert werden, was vor dem Hintergrund ständiger Anpassungs- und Änderungsprozesse insbesondere in Wirtschaft und Verwaltung bei gleichzeitig steigenden Nutzerzahlen hinsichtlich Erweiterungen oder Restrukturierungen erheblichen Aufwand bedeutet. Das erfindungsgemäße Verfahren gewährleistet die dynamische Registrierung von Servern (20, 20') und Applikationen (40, 40', 40'', 40''') an der TK-Anlage (10), welche mit einem Look-up-Table zum Speichern des Parameterpaares Applikations-ID und Server-ID ausgestattet ist.

## Beschreibung

Die Erfindung betrifft ein Verfahren und eine Vorrichtung zum Konfigurieren und Registrieren von Applikationen in einem Kommunikationsnetzwerk, mit einer zwischen Terminals und wenigstens einen Server geschalteten TK-Anlage.

TK-Anlagen der in Rede stehenden Art sind als Vermittlungsanlagen für Telekommunikationssysteme aus dem Stand der Technik bekannt und werden üblicherweise mit einem oder mehreren DV-Systemen (Datenverarbeitungssystemen) verbunden. Diese DV-Systeme verfügen über eine Server-Software, welche die Verbindungen zu der TK-Anlage steuert.

Die Applikationen, welche z.B. aus einer CTI-Applikations-Software (CTI-Computer-Telefony-Integration) bestehen können, ermöglichen das Einrichten, Steuern und Überwachen vermittlungstechnischer Funktionen über die Verbindung zur TK-Anlage. Die externe Applikation, d. h. z. B. eine auf dem Server ablaufende CTI-Applikation, baut dabei mit Hilfe des Servers eine logische Verbindung über die TK-Anlage zu den Terminals auf. Über diese Verbindung können Informationen bis zu den einzelnen Terminals wie digitalen Telefonen der TK-Anlage geschickt werden, z. B. Gesprächsdaten, Anzeigen im Display, Audio- oder Videodaten.

Umgekehrt ist es möglich, dass jedes beliebige Terminal der TK-Anlage über diese logische Verbindung Funktionen der Applikationen, wie z. B. ein externes Telefonbuch, auf dem Server nutzt. Es ist deshalb notwendig, dass die Terminals die einzelnen Applikationen adressieren und damit gezielt ansprechen können.

Üblicherweise wird dies so gelöst, dass jeder Server für jede Applikation eine Verbindung aufbaut. Beim Aufbau dieser Verbindung wird ein Applikationsname wie z. B. Telefonbuch mitgeschickt, welcher eindeutig ist und mit dem die Applikationen ausgehend von der TK-Anlage adressiert werden kann. Deshalb muß bei der Inbetriebnahme eines Telekommunikationssystems, bestehend aus einer TK-Anlage und einem oder mehreren Servern, mit einer oder mehreren Applikationen schon im vorhinein bekannt und vorkonfiguriert sein, welche Applikationen gestartet werden, damit die Terminals diese adressieren und nutzen können. Ein derart vorkonfiguriertes Telekommunikationssystem ist vor dem Hintergrund ständiger Anpassungs- und Änderungsprozesse insbesondere in Wirtschaft und Verwaltung bei gleichzeitig steigenden Nutzerzahlen nur mit erheblichem Aufwand zu erweitern oder zu restrukturieren.

Es ist deshalb Aufgabe der Erfindung, ein Verfahren und eine Vorrichtung zum Konfigurieren eines Telekommunikationssystems dergestalt bereit zu stellen, dass eine Erweiterung oder Restrukturierung unter Erhalt der üblichen Vermittlungsfunktionalität vereinfacht wird.

Diese Aufgabe wird durch ein Verfahren nach Anspruch 1 - 6 und eine Vorrichtung nach Anspruch 7 gelöst.

Ein wesentlicher Gedanke des erfindungsgemäßen Verfahrens zur Lösung dieser Aufgabe besteht darin, dass sich ein schon bestehender oder zusätzlich zu integrierender Server selbst und damit dynamisch, d. h. ohne Mitwirkung eines Administrators, welcher eine Vorkonfiguration vornimmt, an der TK-Anlage anmeldet. Dies geschieht in einem ersten Verfahrensschritt dergestalt, dass ein Verbindungsaufbauwunsch von dem Server an die TK-Anlage ohne Angabe einer spezifischen ID (Identifikation) der Applikation signalisiert wird.

Die TK-Anlage erkennt den Verbindungsaufbauwunsch des Servers und ordnet diesem eine eindeutige ID zu, welche in einem weiteren Verfahrensschritt in einer Bestätigung des Verbindungsaufbauwunsches von der TK-Anlage an den Server signalisiert wird. In einem weiteren Schritt wird die in der Bestätigung enthaltene Server-ID an dem Server registriert, welcher wie üblich die Verbindung zur TK-Anlage steuert. Jede Applikation, welche als für die Terminals adressierbar bestimmt ist, wie z. B. ein externes Telefonbuch, signalisiert nun in einem nächsten Verfahrensschritt ihre ID unter Angabe der Server-ID an die TK-Anlage.

Mit der abschließenden Registrierung des Paramaterpaares Applikations-ID und Server-ID an der TK-Anlage ist nicht nur der Server an der TK-Anlage bekannt, sondern auch die Applikation, welche über diesen Server zu erreichen ist. Damit ist es möglich, einen zusätzlichen Server oder eine Applikation oder beides in ein laufendes System zu integrieren. Die TK-Anlage kennt die externe Architektur nicht, d. h. es ist damit ohne Bedeutung, auf welchem Server welche Applikation läuft.

Weiterbildungen des erfindungsgemäßen Verfahrens sind in den Unteransprüchen 2 - 6 angegeben.

Danach ist es von Vorteil, wenn der Server und die TK-Anlage über eine Kommunikationsstrecke in Verbindung steht oder in Verbindung treten kann. Diese kann sowohl auf leitungsvermittelnden wie auch paketvermittelnden Übertragungstechnologien wie z.B. ISDN und Ethernet basieren und LAN (Local Area Network) oder WAN (Wide Area Network) topologieren aufweisen. Eine Kommunikation zwischen dem Server und der TK-Anlage ist dabei nicht nur auf leitungsgebundene Kommunikationsstrecken beschränkt, sondern kann auch funkgestützt, z.B. auf Basis der Bluetooth-Technologie erfolgen.

Bevorzugt wird im erfindungsgemäßen Verfahren das Protokoll-Feld zur Angabe der rufenden Applikation leer gelassen. So kann z.B. beim Aufbau einer B-Kanal-Verbindung ausgehend vom Server zur TK-Anlage diese daraufhin dem anfragenden Server eine eindeutige Identifikation zuordnen und in der Bestätigung für den Verbindungsaufbauwunsch zurückgeben.

Von Vorteil ist es dabei, wenn die von der TK-Anlage zugeordnete Server-ID nach Registrierung an dem Server zum Aufbau weiterer Verbindungen zwischen Server und TK-Anlage genutzt wird. Baut der Server, z.B. zur Lastverteilung, mehrere Verbindungen zur TK-Anlage auf, so benutzt er in den folgenden Verbindungsaufbaumeldungen die von der TK-Anlage vergebene Server-ID. Alle Applikationen, die über diesen Server mit der TK-Anlage kommunizieren wollen, können dies nun tun.

Nach der erfolgreichen dynamischen Konfiguration von Servern und Applikationen über die TK-Anlage wird zur Adressierung einer Applikation durch ein mit der TK-Anlage verbundenes Terminal in umgekehrter Richtung zunächst die Applikations-ID und die ID des Servers benötigt, über welchen die Applikation erreichbar ist. Das Parameterpaar Applikations-ID und Server-ID wird dazu durch die Terminals an der TK-Anlage abgefragt. In einem weiteren Verfahrensschritt wird dann die logische Verbindung zwischen den Terminals über die TK-Anlage und den Server zu der gewünschten Applikation aufgebaut. Damit können die Terminals einzelner Applikationen, welche bei Aufruf dynamisch an der TK-Anlage, zusammen mit der ID des Servers, über welche sie erreichbar sind, adressiert werden. Eine feste Vorkonfiguration während des Betriebes adressierbarer Applikationen (und Server bei Inbetriebnahme einer Telekommunikationsanlage) ist damit nicht mehr nötig.

Bevorzugt kommunizieren bei dem erfindungsgemäßen Verfahren eine oder mehrere der Applikationen über ein Rechner-Netzwerk mit dem Server. Dies kann insbesondere bei der Ausstattung von größeren Organisationseinheiten mit Telekommunikationsmitteln von Vorteil sein, da einzelne DV-Systeme mit darauf ablaufenden Applikationen ohne weiteres in das Rechnernetzwerk integrierbar sind, ohne am Server Veränderungen vornehmen zu müssen. Der Server ist in umgekehrter Richtung zur Verteilung der Meldungen zu den unterschiedlichen Applikationen auf den externen DV-Systemen zuständig. Dies kann über übliche Routing-Mechanismen eines Rechnernetzwerkes geschehen.

Die Aufgabe wird weiterhin durch eine Vorrichtung zur Durchführung des erfindungsgemäßen Verfahrens gelöst, bei der an der TK-Anlage ein Look-Up-Table zum Speichern des jeweiligen Parameterpaares Applikations-ID und Server-ID vorgesehen ist, welcher im Betrieb elektrisch programmierbar ist. Dieser kann z.B. als System-Table eines Betriebssystems oder als Table eines herkömmlichen Datenbanksystems, z. B. in Informix, Ingris o. ä. ansprechbar sein.

Die Erfindung wird im folgenden anhand eines Ausführungsbeispieles näher erläutert.

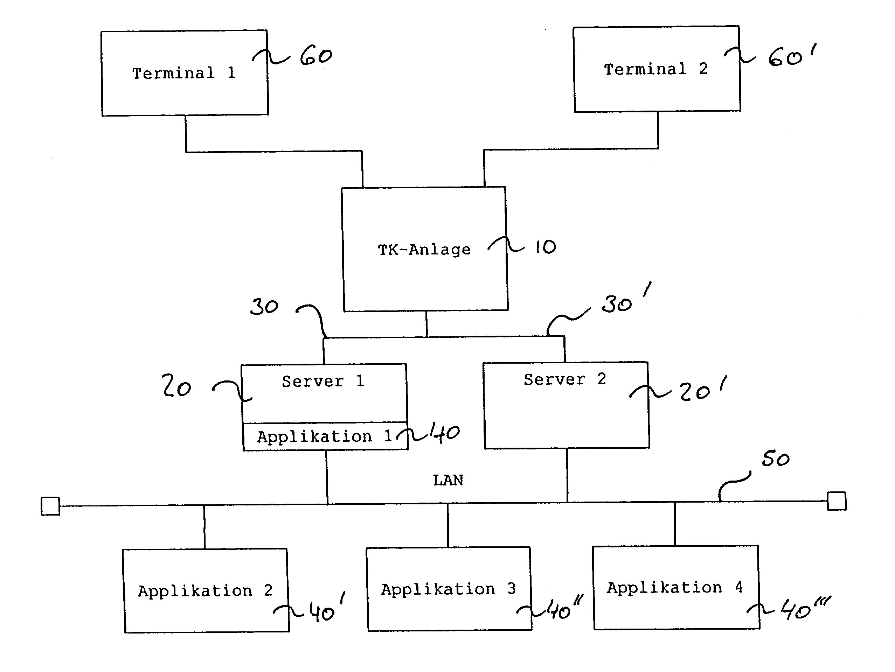

Die einzige Figur zeigt ein Blockschaltbild eines erfindungsgemäßen Kommunikationsnetzwerkes. Eine TK-Anlage 10 ist mit zwei Servern 20, 20' jeweils über eine Kommunikationsstrecke 30, 30' verbunden. In der hier beschriebenen Ausführungsform besteht diese aus einem ISDN-Bus, kann aber auch durchaus auf Ethernet-Basis ausgeführt sein. Eine Applikation (1) 40 läuft auf dem ersten Server 20 ab, während weitere Applikationen (2 bis 4) 40', 40'', 40''' über ein LAN 50 mit beiden Servern 20, 20', sowie Terminals (1 und 2) 60, 60' mit der TK-Anlage 10 verbunden sind.

Beim Aufbau einer Verbindung zwischen z. B. einem der Server 20, 20' und der TK-Anlage 10 über die Kommunikationsstrecken 30 bzw. 30' bleibt das Protokoll-Feld für die rufende Applikation (Calling-Application) leer. Daraufhin vergibt die TK-Anlage dem jeweils anfragenden Server 20, 20' eine eindeutige ID, welche in der Bestätigung für den Verbindungsaufbauwunsch dieses Servers zurückgeschickt und an diesem registriert wird. Damit ist die Server-ID an der TK-Anlage 10 und an z.B. dem Server 20 bekannt. Bei Anfrage des Servers 20' läuft das beschriebene Verfahren analog ab.

Will nun die Applikation (2) 40' mit dem Terminal (2) 60', welches z. B. ein Telefon ist, kommunizieren, wird ihre Applikations-ID zusammen mit der Server-ID - in diesem Fall der Server-ID des Servers (1) 20 - an der TK-Anlage 10 registriert. Die Verbindung zwischen der Applikation (1) 40' und der TK-Anlage 10 kommt dabei in herkömmlicher Weise zunächst zwischen der Applikation (1) 40 und dem Server 20 über das LAN 50 und schließlich über die Kommunikationsstrecke 30 zustande. Die TK-Anlage 10 vermittelt den Verbindungsaufbauwunsch der Applikation (1) 40' schließlich an das Terminal (2) 60'. Will umgekehrt z. B. das Terminal (1) 60 mit der Applikation (3) 40'' kommunizieren, muß die Applikation (3) 40'' in eben beschriebener Weise ebenfalls an der TK-Anlage 10 und zusammen mit der Server-ID des Servers (1) 20 registriert sein. Das Parameterpaar Applikations-ID der Applikation (3) 40'' und Server-ID des Servers (1) 20 kann dann an der TK-Anlage 10 abgefragt und von dort aus eine Verbindung zur Applikation (3) 40'' über übliche Routing-Mechanismen eines Rechner-Netzwerkes, hier des LAN 50 hergestellt werden.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichenliste

- 10: TK-Anlage
- 20, 20': Server
- 30, 30': Kommunikationsstrecke
- 40, 40', 40'', 40''': Applikation
- 50: Rechnernetzwerk
- 60, 60': Terminal

## Patentansprüche

1. Verfahren zum Konfigurieren und Registrieren von Applikationen (40, 40', 40'') in einem Kommunikationsnetzwerk, mit einer zwischen Terminals (60, 60') und wenigstens einen Server (20, 20') geschalteten TK-Anlage (10), folgende Verfahrensschritte aufweisend:
a) Signalisieren eines Verbindungsaufbauwunsches von dem Server (20, 20') an die TK-Anlage (10) ohne Angabe einer ID,
b) Zuordnen einer eindeutigen ID für den Server (20, 20') durch die TK-Anlage (10),
c) Signalisieren einer Bestätigung an den Server (20, 20'), welche die Server-ID enthält,
d) Registrieren der in der Bestätigung enthaltenen Server-ID an dem Server (20, 20'),
e) Signalisieren einer ID der Applikation (40, 40', 40'', 40''') an die TK-Anlage (10) unter Angabe der Server-ID, und
f) Registrieren des Parameterpaares Applikations-ID und Server-ID an der TK-Anlage (10).

2. Verfahren nach Anspruch 1 bei dem der Server (20, 20') und die TK-Anlage (10) über eine Kommunikationsstrecke (30, 30') in Verbindung steht oder in Verbindung treten kann.

3. Verfahren nach Anspruch 2, bei dem im Verfahrensschritt a) das Protokoll-Feld zur Angabe der rufenden Applikation (40, 40', 40'', 40''') leer bleibt.

4. Verfahren nach einem der vorstehenden Ansprüche, bei dem im Verfahrenschritt d) die Server-ID zum Aufbau weiterer Verbindungen zwischen Server (20, 20') und TK-Anlage (10) genutzt wird.

5. Verfahren nach einem der vorstehenden Ansprüche, mit den weiteren Verfahrensschritten:
g) Abfragen des Parameterpaares Applikations-ID und Server-ID an der TK-Anlage (10) durch die Terminals (60, 60'),
h) Aufbauen einer logischen Verbindung zwischen den Terminals über den Server (20, 20') zu der gewünschten Applikation (40, 40', 40'', 40''').

6. Verfahren nach einem der vorstehenden Ansprüche, bei dem eine oder mehrere der Applikationen (40, 40', 40'', 40''') über ein Rechner-Netzwerk (50) mit dem Server (20, 20') kommunizieren.

7. Vorrichtung zur Durchführung des Verfahrens nach einem der vorstehenden Ansprüche,
**dadurch gekennzeichnet, dass**
an der TK-Anlage (10) ein Look-up-Table zum Speichern des jeweiligen Parameterpaares Applikations-ID und Server-ID vorgesehen ist, welcher im Betrieb elektrisch programmierbar ist.
